# EUROPÄISCHE PATENTSCHRIFT

(11) **EP 3 794 923 B1**
(45) Veröffentlichungstag und Bekanntmachung des Hinweises auf die Patenterteilung: **09.09.2026**
(21) Anmeldenummer: 20186167.1
(22) Anmeldetag: 16.07.2020
(51) Int. Cl.: A01D 34/13

(54) **LANDWIRTSCHAFTLICHE ARBEITSMASCHINE**
AGRICULTURAL MACHINE
MACHINE DE TRAVAIL AGRICOLE

(30) Priorität: 23.09.2019 DE 102019125501
(43) Veröffentlichungstag der Anmeldung: 24.03.2021
(73) Patentinhaber: CLAAS Selbstfahrende Erntemaschinen GmbH, 33428 Harsewinkel (DE)
(72) Erfinder: Dehmelt, Jan, 33649 Bielefeld (DE)
(74) Vertreter: CLAAS Gruppe

(56) Entgegenhaltungen:
- EP-A1- 2 497 353
- EP-A1- 3 440 914
- CN-A- 104 661 512
- US-A1- 2017 164 567

## Beschreibung

Die vorliegende Erfindung betrifft eine landwirtschaftliche Arbeitsmaschine gemäß dem Oberbegriff von Anspruch 1.

Der bekannte Stand der Technik (DE 10 2015 103 922 A1, EP 3 440 914 A1), von dem die Erfindung ausgeht, betrifft eine landwirtschaftliche Arbeitsmaschine gemäß dem Oberbegriff von Anspruch 1.

Landwirtschaftliche Arbeitsmaschinen, zu denen insbesondere selbstfahrende Erntemaschinen wie Mähdrescher und Feldhäcksler, aber auch Traktoren zählen, weisen regelmäßig verschiedene Arbeitsaggregate zur Durchführung oder Unterstützung landwirtschaftlicher Arbeit auf. Beispiele für Arbeitsaggregate eines Mähdreschers sind unter anderem das Dreschwerk, die dem Dreschwerk nachgeschaltete Trenneinrichtung, die der Trenneinrichtung nachgeschaltete Reinigungs- und Siebeinrichtung, die der Siebeinrichtung nachgeschaltete Überkehr und der der Trenneinrichtung nachgeschaltete Häcksler.

Ein weiteres solches Arbeitsaggregat ist ein Schneidwerk, das im Anwendungsfall eines Mähdreschers als Erntevorsatz dem Dreschwerk vorgeschaltet ist. Das Vorhandensein eines Schneidwerks ist aber nicht auf den Anwendungsfall eines Mähdreschers beschränkt. So können neben einem Mähdrescher auch andere landwirtschaftliche Arbeitsmaschinen über ein Schneidwerk verfügen, beispielsweise ein Traktor, der als Schneidwerk ein Front- oder Heckmähwerk oder ein gezogenes Mähwerk aufweisen kann.

Ganz allgemein dient ein Schneidwerk zum Schneiden und Aufnehmen von Erntegut aus einem Feldbestand und weist dazu einen Messerbalken auf, der mit mehreren hin- und her bewegbaren Messerklingen und dazu feststehenden Mähfingern und Niederhaltern ausgestattet ist.

Es ist dabei eine Herausforderung, die Messerklingen hinsichtlich ihres Verschleißgrads optimal zu bewerten. Durch das Eigengewicht und die Schnittkräfte während des Betriebs entsteht eine resultierende Kraft, die die jeweilige Messerklinge auf den zugeordneten Mähfinger drückt, wodurch die Messerklinge auf der Klingenunterseite verschleißt. Zusätzlich verschleißen die Schneiden der Messerklingen seitlich durch den Betrieb. Der Benutzer kann dabei schwer abschätzen, ob der Verschleiß bereits so weit fortgeschritten ist, dass ein Grenz-Verschleißgrad erreicht ist, der den Austausch der jeweiligen Messerklinge erfordert. Dies führt dazu, dass die Messerklingen häufig zu früh oder auch zu spät ausgetauscht werden.

Der Erfindung liegt das Problem zugrunde, die bekannten Landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, an den Messerklingen mindestens eine Verschleißmarke vorzusehen, anhand derer der Benutzer durch bloße Inaugenscheinnahme feststellen kann, ob durch den Betrieb zwischenzeitlich ein vorgegebener Grenz-Verschleißgrad erreicht worden ist und die jeweilige Messerklinge ausgetauscht werden muss, oder ob der vorgegebene Grenz-Verschleißgrad noch nicht erreicht ist und entsprechend die Messerklinge noch weiter verwendet werden kann. Dabei ist mindestens eine erste Verschleißmarke zur Bewertung des Verschleißes der Klingenunterseite und mindestens eine zweite Verschleißmarke zur Bewertung des Verschleißes der Schneiden bzw. der Schneidenkanten vorgesehen. Je Verschleißart können auch mehrere Verschleißmarken vorgesehen sein, wie im Weiteren noch beschrieben wird.

Im Einzelnen wird vorgeschlagen, dass den Messerklingen jeweils mindestens eine erste Verschleißmarke, die den Verschleiß der Klingenunterseite der jeweiligen Messerklinge indiziert, und mindestens eine zweite Verschleißmarke, die den Verschleiß von Schneiden der jeweiligen Messerklinge indiziert, zugeordnet ist.

Im Folgenden wird die Erfindung anhand einer lediglich Ausführungsbeispiele darstellenden Zeichnung näher erläutert. In der Zeichnung zeigt
- Fig. 1: eine schematische Seitenansicht einer landwirtschaftlichen Arbeitsmaschine und eine Perspektivansicht einer Messerklinge der landwirtschaftlichen Arbeitsmaschine a) gemäß einem ersten Ausführungsbeispiel und b) gemäß einem zweiten Ausführungsbeispiel und

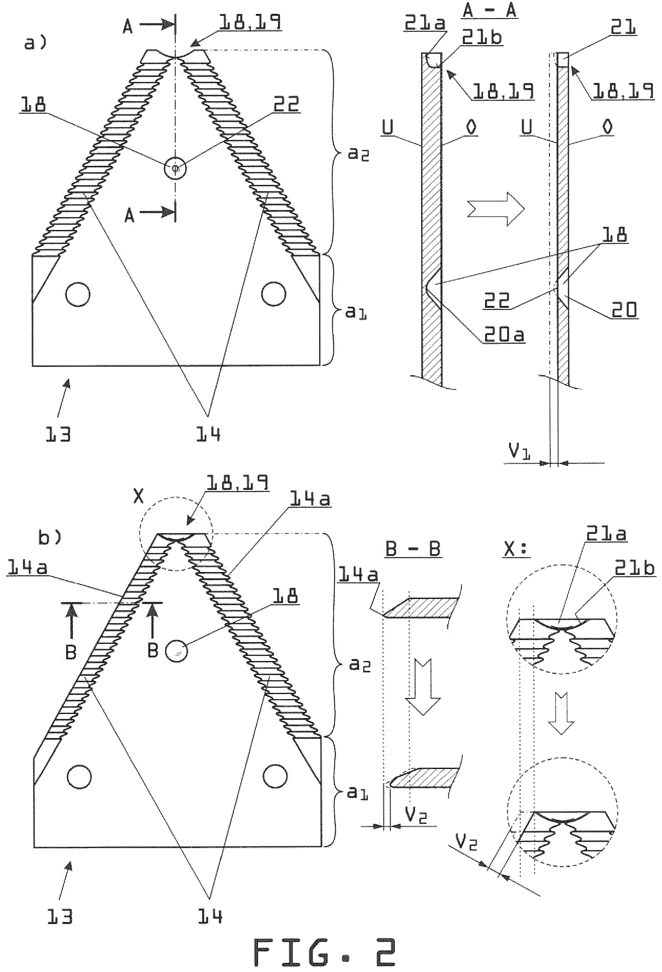

- Fig. 2: eine Draufsicht einer Messerklinge gemäß Fig. 1a) mit Verschleiß a) der Klingenunterseite und b) einer der Schneiden.

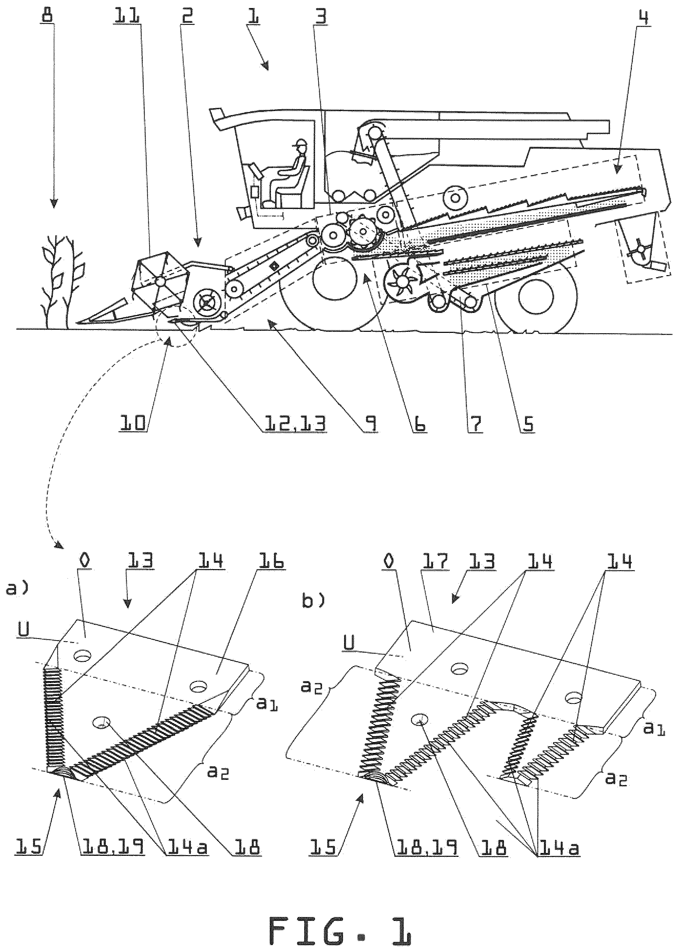

Die in Fig. 1 dargestellte vorschlagsgemäße landwirtschaftliche Arbeitsmaschine 1, bei der es sich hier beispielhaft um einen Mähdrescher handelt, ist zur Verarbeitung von Erntegut eingerichtet und umfasst mehrere Arbeitsaggregate 2-7 zur Durchführung oder Unterstützung landwirtschaftlicher Arbeit. Hier und vorzugsweise handelt es sich bei den Arbeitsaggregaten um ein Schneidwerk 2 zum Schneiden und Aufnehmen von Erntegut aus einem Feldbestand 8, um ein Dreschwerk 3 zum Entkörnen von Erntegut, um eine dem Dreschwerk 3 nachgeschaltete Trenneinrichtung 4 zum Trennen des Ernteguts in Kornbestandteile und Nichtkornbestandteile, um eine der Trenneinrichtung 4 nachgeschaltete Reinigungs- bzw. Siebeinrichtung 5 zum Entmischen von Erntegut, um einen der Trenneinrichtung 4 nachgeschalteten Häcksler 6 zum Zerkleinern von Erntegut und um eine der Siebeinrichtung 5 nachgeschaltete Überkehr 7 zum Zurückführen von Erntegut zum Dreschwerk 3. Diese Aufzählung von Arbeitsaggregaten 2-7 ist nicht abschließend zu verstehen. Vielmehr kann die landwirtschaftliche Arbeitsmaschine 1 noch weitere Arbeitsaggregate aufweisen. Weiter ist ein Einzugskanal 9 vorgesehen, über den das Erntegut vom Schneidwerk 2 zum Dreschwerk 3 transportiert wird.

Das Schneidwerk 2 ist auf eine gewünschte Schneidwerkshöhe, das heißt eine gewünschte Beabstandung zum Boden, einstellbar. Das Schneidwerk 2 weist einen Schneidtisch 10 und eine rotierend angetriebene Haspel 11 auf, wobei die Haspel 11 gegenüber dem Schneidtisch 10 insbesondere höhenverstellbar und/oder in horizontaler Richtung, insbesondere quer zur Fahrtrichtung, verstellbar ist. Das zu erntende Erntegut wird von einem an der vorderen Kante des Schneidtischs 10 angeordneten, sich quer zur Fahrtrichtung erstreckenden Messerbalken 12 des Schneidwerks 2 abgetrennt, wobei das abgetrennte Erntegut anschließend mit Hilfe der Haspel 11 zu einer im Schneidtisch 10 angeordneten, rotierend angetriebenen Einzugsschnecke gefördert wird. Die Einzugsschnecke führt das Erntegut dem Einzugskanal 9 zu, der das Erntegut dann im Mähdrescher dem Dreschwerk 3 zuführt.

Der Messerbalken 12 weist mehrere quer zur Fahrtrichtung hin- und her bewegbare, entlang des Messerbalkens 12 nebeneinander angeordnete Messerklingen 13 auf, die jeweils mit seitlichen Schneiden 14, beispielsweise gezahnten Schneiden 14, versehen sind. "Seitlich" meint, dass die Schneiden 14 quer zur Fahrtrichtung gerichtet sind. Vorzugsweise laufen immer zwei Schneiden 14 zur Klingenspitze 15 hin, also zum vorderen Ende der Messerklinge 13 hin, aufeinander zu. Hier und vorzugsweise weist eine als Einfachklinge 16 ausgestaltete Messerklinge 13 zwei seitlich Schneiden 14 und eine als Doppelklinge 17 ausgestaltete Messerklinge 13 vier seitliche Schneiden 14 auf.

Außerdem weist der Messerbalken 12 zu den Messerklingen 13 feststehende, unterhalb der Messerklingen 13 angeordnete Mähfinger (nicht dargestellt), die als Gegenmesser und unterseitige Führung der Messerklingen 13 ausgebildet sind, und zu den Messerklingen 13 feststehende, oberhalb der Messerklingen 13 angeordnete Niederhalter (nicht dargestellt), die als oberseitige Führung der Messerklingen 13 ausgebildet sind, auf.

Das in den Figuren dargestellte und insoweit bevorzugte Ausführungsbeispiel betrifft eine landwirtschaftliche Arbeitsmaschine 1, insbesondere einen Mähdrescher, mit mindestens einem Arbeitsaggregat 2-7 zur Durchführung oder Unterstützung landwirtschaftlicher Arbeit, wobei als ein Arbeitsaggregat 2-7 ein Schneidwerk 2 zum Schneiden und Aufnehmen von Erntegut aus einem Feldbestand 8 vorgesehen ist, wobei das Schneidwerk 2 einen Messerbalken 12 mit mehreren Messerklingen 13 aufweist.

Wesentlich ist nun, dass den Messerklingen 13 jeweils mindestens eine erste Verschleißmarke 18, die den Verschleiß V₁ der Klingenunterseite U der jeweiligen Messerklinge 13 indiziert, und mindestens eine zweite Verschleißmarke 19, die den Verschleiß V₂ von Schneiden 14 der jeweiligen Messerklinge 13 indiziert, zugeordnet ist.

Mit der "Klingenunterseite" ist die dem zugeordneten Mähfinger (nicht dargestellt) und entsprechend dem zu bearbeitenden Boden des Feldes zugewandte Seite der Messerklinge 13 gemeint. Entsprechend ist die "Klingenoberseite" die dem zugeordneten Niederhalter (nicht dargestellt) zugewandte und vom zu bearbeitenden Boden des Feldes abgewandte Seite der Messerklinge 13.

Bei dem in den Figuren dargestellten und insoweit bevorzugten Ausführungsbeispiel ist ferner vorgesehen, dass die Messerklingen 13 jeweils einen Befestigungsabschnitt a₁, eingerichtet zur Befestigung der jeweiligen Messerklinge 13 am Messerbalken 12 im Übrigen, und mindestens einen an den Befestigungsabschnitt a₁ angrenzenden, jeweils mit zwei Schneiden 14, vorzugsweise aufeinander zulaufenden Schneiden 14, versehenen Schneidenabschnitt a₂ aufweisen, wobei mindestens ein Schneidenabschnitt a₂ im Bereich zwischen seinen beiden Schneiden 14, beabstandet zu seinem vorderen Ende, eine erste Verschleißmarke 18 und/oder an seinem vorderen Ende eine zweite Verschleißmarke 19 und vorzugsweise eine weitere erste Verschleißmarke 18 aufweist.

Das vordere Ende des Schneidenabschnitts a₂, also das vom Befestigungsabschnitt a₁ abgewandte Ende des Schneidenabschnitts a₂, bildet gleichzeitig auch die Klingenspitze 15 der jeweiligen Messerklinge 13. Dabei ist der Begriff "Spitze" weit zu verstehen und umfasst nicht nur spitz zulaufende Spitzen, sondern auch abgeflachte Spitzen.

Weiter ist hier und vorzugsweise vorgesehen, dass an den jeweiligen Befestigungsabschnitt a₁ genau ein Schneidenabschnitt a₂ angrenzt, der im Bereich zwischen seinen beiden Schneiden 14, beabstandet zu seinem vorderen Ende, eine erste Verschleißmarke 18 und an seinem vorderen Ende eine zweite Verschleißmarke 19 und vorzugsweise eine weitere erste Verschleißmarke 18 aufweist, oder, dass an den jeweiligen Befestigungsabschnitt a₁ mehrere, insbesondere zwei, Schneidenabschnitte a₂ angrenzen, von denen mindestens einer, vorzugsweise genau einer, oder alle jeweils im Bereich zwischen den beiden Schneiden 14, beabstandet zum vorderen Ende, eine erste Verschleißmarke 18 und am vorderen Ende eine zweite Verschleißmarke 19 und vorzugsweise eine weitere erste Verschleißmarke 18 aufweist/aufweisen.

Darüber hinaus ist hier und vorzugsweise vorgesehen, dass die vom vorderen Ende des Schneidenabschnitts a₂ beabstandete erste Verschleißmarke 18 von einem, insbesondere kreisförmigen, nach unten vertieften Abschnitt 20, insbesondere einem konusförmig oder keilförmig vertieften Abschnitt 20, der einen Abschnitts-Boden 20a aufweist, gebildet wird, und dass bei Erreichen eines vorgegebenen Grenz-Verschleißgrads der Abschnitts-Boden 20a durchbrochen ist, und/oder, dass die am vorderen Ende des Schneidenabschnitts a₂ angeordnete erste Verschleißmarke 18 von einem, insbesondere kreissegmentförmigen, nach unten vertieften Abschnitt 21, insbesondere einem eine Stufe bildenden vertieften Abschnitt 21, der einen Abschnitts-Boden 21a aufweist, gebildet wird und dass bei Erreichen eines vorgegebenen Grenz-Verschleißgrads der Abschnitts-Boden 21a teilweise oder vollständig abgetragen ist.

Der Begriff "kreisförmig" bedeutet hier, dass der vertiefte Abschnitt 20 in einem Schnitt parallel zur Klingenunterseite U und Klingenoberseite O einen kreisförmigen Querschnitt aufweist. "Kreissegmentförmig" bedeutet entsprechend, dass besagter Querschnitt des vertieften Abschnitts 21 die Form eines Kreissegments aufweist.

Der Begriff "nach unten vertieft" meint, dass der Abschnitt 20, 21 in Richtung der Klingenunterseite U vertieft ist. Insbesondere handelt es sich dabei um eine Einprägung, also eine durch Prägen erzeugte Vertiefung.

Ein Abschnitt 21 in Form einer "Stufe" ist ein Abschnitt, dessen tiefster Punkt bzw. dessen Boden 21a nicht vollständig von einer Seitenwand 21b umgeben ist. Im Gegenteil, der vertiefte Abschnitt 21 weist nur zu einer Seite eine Seitenwand 21b, besagte Abschnitts-Seitenwand 21b, auf, ist zur anderen Seite aber offen. Die Abschnitts-Seitenwand 21b entspricht bei einer Trittstufe einer Treppe der sogenannten Setzstufe.

Der "Grenz-Verschleißgrad" ist der Verschleißgrad, der den Austausch der jeweiligen Messerklinge 13 erfordert. Der Grenz-Verschleißgrad kann zwar grundsätzlich überschritten werden, wobei dann aber Schnittbild und Ernteeffizienz unzureichend sind.

Der Begriff "durchbrochen" bedeutet, dass der vor dem Erreichen des Grenz-Verschleißgrads nach unten geschlossene vertiefte Abschnitt 20 dann ein Loch 22 aufweist. Sobald der Benutzer dies erkennt, weiß er, dass der Grenz-Verschleißgrad erreicht ist. Durch die ständige Reibung der Klingenunterseite U insbesondere an dem zugeordneten Mähfinger (nicht dargestellt) verliert die Messerklinge 13 hier Material, bis im Bereich des vertieften Abschnitts 20 das Material soweit abgetragen ist, dass eben ein Loch 22 entsteht. Bei der vorderen der beiden ersten Verschleißmarken 18 wird dadurch der Abschnitts-Boden 21a teilweise oder vollständig abgetragen, wobei "vollständig" meint, dass der Abschnitts-Boden 21a nicht mehr vorhanden ist und nur noch die Abschnitts-Seitenwand 21b oder jedenfalls ein Teil davon verbleibt.

Darüber hinaus ist hier und vorzugsweise vorgesehen, dass die am vorderen Ende des Schneidenabschnitts a₂ angeordnete zweite Verschleißmarke 19 von einem, insbesondere kreissegmentförmigen, nach unten vertieften Abschnitt 21, insbesondere einem eine Stufe bildenden vertieften Abschnitt 21, der eine kreisbogenförmige Abschnitts-Seitenwand 21b aufweist, gebildet wird und dass bei Erreichen eines vorgegebenen Grenz-Verschleißgrads die jeweilige Schneidenkante 14a oder gedachte Verlängerung der jeweiligen Schneidenkante 14a auf die kreisbogenförmige Abschnitts-Seitenwand 21b trifft.

Der hier definierte, nach unten vertiefte Abschnitt 21 ist insbesondere derselbe, der auch die am vorderen Ende des Schneidenabschnitts a₂ angeordnete der ersten Verschleißmarken 18 bildet. Entsprechend stimmt insbesondere auch die Abschnitts-Seitenwand 21b hier mit derjenigen überein, die im Zusammenhang mit der besagten ersten Verschleißmarke 18 beschrieben wurde.

Die "Schneidenkante" ist dabei die außenseitige Kante der jeweiligen Schneide 14. Verschleißbedingt, nämlich durch Materialabtrag, verlagert sich diese Schneidenkante 14a immer weiter nach innen, so dass ein zuvor bestehender Abstand zwischen der Schneidenkante 14a und der Abschnitts-Seitenwand 21b immer kleiner wird. Sobald hier kein Abstand mehr vorhanden ist, die Schneidenkante 14a also mit der Abschnitts-Seitenwand 21b zusammentrifft, ist der vorgegebene Grenz-Verschleißgrad erreicht.

### Bezugszeichenliste

- 1: landwirtschaftliche Arbeitsmaschine
- 2: Schneidwerk
- 3: Dreschwerk
- 4: Trenneinrichtung
- 5: Reinigungs- bzw. Siebeinrichtung
- 6: Häcksler
- 7: Überkehr
- 8: Feldbestand
- 9: Einzugskanal
- 10: Schneidtisch
- 11: Haspel
- 12: Messerbalken
- 13: Messerklingen
- 14: Schneide
- 14a: Schneidenkante
- 15: Klingenspitze
- 16: Einfachklinge
- 17: Doppelklinge
- 18: erste Verschleißmarke
- 19: zweite Verschleißmarke
- 20: vertiefter Abschnitt
- 20a: Abschnitts-Boden
- 21: vertiefter Abschnitt
- 21a: Abschnitts-Boden
- 21b: Abschnitts-Seitenwand
- 22: Loch
- a₁: Befestigungsabschnitt
- a₂: Schneidenabschnitt
- O: Klingenoberseite
- U: Klingenunterseite
- V₁: Verschleiß
- V₂: Verschleiß

## Patentansprüche

1. Landwirtschaftliche Arbeitsmaschine, insbesondere Mähdrescher, mit mindestens einem Arbeitsaggregat (2-7) zur Durchführung oder Unterstützung landwirtschaftlicher Arbeit, wobei als ein Arbeitsaggregat (2-7) ein Schneidwerk (2) zum Schneiden und Aufnehmen von Erntegut aus einem Feldbestand (8) vorgesehen ist, wobei das Schneidwerk (2) einen Messerbalken (12) mit mehreren Messerklingen (13) aufweist,
wobei den Messerklingen (13) jeweils mindestens eine erste Verschleißmarke (18), die den Verschleiß (V₁) der Klingenunterseite (U) der jeweiligen Messerklinge (13) indiziert, zugeordnet ist,
**dadurch gekennzeichnet, dass** den Messerklingen (13) jeweils
mindestens eine zweite Verschleißmarke (19), die den Verschleiß (V₂) von Schneiden (14) der jeweiligen Messerklinge (13) indiziert, zugeordnet ist, wobei die mindestens eine zweite Verschleißmarke (19) zur Bewertung des Verschleißes der Schneidenkanten (14a) vorgesehen ist, wobei die Schneidenkante (14a) die außenseitige Kante der jeweiligen Schneide (14) ist.

2. Landwirtschaftliche Arbeitsmaschine nach Anspruch 1, **dadurch gekennzeichnet, dass** die Messerklingen (13) jeweils einen Befestigungsabschnitt (a₁), eingerichtet zur Befestigung der jeweiligen Messerklinge (13) am Messerbalken (12) im Übrigen, und mindestens einen an den Befestigungsabschnitt (a₁) angrenzenden, jeweils mit zwei Schneiden (14), vorzugsweise aufeinander zulaufenden Schneiden (14), versehenen Schneidenabschnitt (a₂) aufweisen, wobei mindestens ein Schneidenabschnitt (a₂) im Bereich zwischen seinen beiden Schneiden (14), beabstandet zu seinem vorderen Ende, eine erste Verschleißmarke (18) und/oder an seinem vorderen Ende eine zweite Verschleißmarke (19) und vorzugsweise eine weitere erste Verschleißmarke (18) aufweist.

3. Landwirtschaftliche Arbeitsmaschine nach Anspruch 2, **dadurch gekennzeichnet, dass** an den jeweiligen Befestigungsabschnitt (a₁) genau ein Schneidenabschnitt (a₂) angrenzt, der im Bereich zwischen seinen beiden Schneiden (14), beabstandet zu seinem vorderen Ende, eine erste Verschleißmarke (18) und an seinem vorderen Ende eine zweite Verschleißmarke (19) und vorzugsweise eine weitere erste Verschleißmarke (18) aufweist, oder,
dass an den jeweiligen Befestigungsabschnitt (a₁) mehrere, insbesondere zwei, Schneidenabschnitte (a₂) angrenzen, von denen mindestens einer, vorzugsweise genau einer, oder alle jeweils im Bereich zwischen den beiden Schneiden (14), beabstandet zum vorderen Ende, eine erste Verschleißmarke (18) und am vorderen Ende eine zweite Verschleißmarke (19) und vorzugsweise eine weitere erste Verschleißmarke (18) aufweist/aufweisen.

4. Landwirtschaftliche Arbeitsmaschine nach einem der Ansprüche 2 oder 3, **dadurch gekennzeichnet, dass** die vom vorderen Ende des Schneidenabschnitts (a₂) beabstandete erste Verschleißmarke (18) von einem, insbesondere kreisförmigen, nach unten vertieften Abschnitt (20), insbesondere einem konusförmig oder keilförmig vertieften Abschnitt (20), der einen Abschnitts-Boden (20a) aufweist, gebildet wird, und dass bei Erreichen eines vorgegebenen Grenz-Verschleißgrads der Abschnitts-Boden (20a) durchbrochen ist, und/oder,
dass die am vorderen Ende des Schneidenabschnitts (a₂) angeordnete erste Verschleißmarke (18) von einem, insbesondere kreissegmentförmigen, nach unten vertieften Abschnitt (21), insbesondere einem eine Stufe bildenden vertieften Abschnitt (21), der einen Abschnitts-Boden (21a) aufweist, gebildet wird und dass bei Erreichen eines vorgegebenen Grenz-Verschleißgrads der Abschnitts-Boden (21a) teilweise oder vollständig abgetragen ist.

5. Landwirtschaftliche Arbeitsmaschine nach einem der Ansprüche 2 bis 4, **dadurch gekennzeichnet, dass** die am vorderen Ende des Schneidenabschnitts (a₂) angeordnete zweite Verschleißmarke (19) von einem, insbesondere kreissegmentförmigen, nach unten vertieften Abschnitt (21), insbesondere einem eine Stufe bildenden vertieften Abschnitt (21), der eine kreisbogenförmige Abschnitts-Seitenwand (21b) aufweist, gebildet wird und dass bei Erreichen eines vorgegebenen Grenz-Verschleißgrads die jeweilige Schneidenkante (14a) oder gedachte Verlängerung der jeweiligen Schneidenkante (14a) auf die kreisbogenförmige Abschnitts-Seitenwand (21b) trifft.

## Claims

1. Agricultural working machine, in particular combine harvester, with at least one working unit (2-7) for carrying out or assisting agricultural work, wherein a cutting unit (2) for cutting and receiving harvested material from a field crop (8) is provided as a working unit (2-7), wherein the cutting unit (2) has a knife bar (12) with a plurality of knife blades (13),
wherein
at least one first wear mark (18) is assigned to each knife blade (13), which wear mark indicates the wear (V₁) of the blade underside (U) of the respective knife blade (13),
**characterized in that** at least one second wear mark (19), which indicates the wear (V₂) of blades (14) of the respective knife blade (13), is assigned to each of the knife blades (13), wherein the at least one second wear mark (19) is provided for evaluating the wear of the cutting edges (14a), wherein the cutting edge (14a) is the outside edge of the respective blade (14).

2. Agricultural working machine according to Claim 1, **characterized in that** the knife blades (13) each have a fastening portion (a₁), configured to otherwise fasten the respective knife blade (13) to the knife bar (12), and at least one blade portion (a₂) adjacent to the fastening portion (a₁) and each provided with two blades (14), preferably blades (14) which taper towards one another, wherein at least one blade portion (a₂) has, in the region between its two blades (14), a first wear mark (18), spaced apart from its front end, and/or, at its front end, a second wear mark (19) and preferably a further first wear mark (18).

3. Agricultural working machine according to Claim 2, **characterized in that** the respective fastening portion (a₁) is adjoined by exactly one blade portion (a₂), which, in the region between its two blades (14), has a first wear mark (18), spaced apart from its front end, and, at its front end, a second wear mark (19) and preferably a further first wear mark (18), or
**in that** the respective fastening portion (a₁) is adjoined by a plurality of, in particular two, blade portions (a₂), of which at least one, preferably exactly one, or all each has/have, in the region between the two blades (14), spaced apart from the front end, a first wear mark (18) and, at the front end, a second wear mark (19) and preferably a further first wear mark (18).

4. Agricultural working machine according to either of Claims 2 or 3, **characterized in that** that the first wear mark (18), spaced apart from the front end of the blade portion (a₂), is formed by a portion (20) which is, in particular, circular and depressed downwards, in particular a portion (20) which is depressed in a conical or wedge-shaped manner and has a portion bottom (20a), and **in that**, when a specified limit degree of wear is reached, the portion bottom (20a) is pierced, and/or in that the first wear mark (18) arranged at the front end of the blade portion (a₂) is formed by a portion (21) which is, in particular, circular segment-shaped and is depressed downwards, in particular a depressed portion (21), which forms a step and has a portion bottom (21a), and **in that** the portion bottom (21a) is partially or completely removed when a specified limit degree of wear is reached.

5. Agricultural working machine according to one of Claims 2 to 4, **characterized in that** the second wear mark (19) arranged at the front end of the blade portion (a₂) is formed by a portion (21), in particular circular segment-shaped and depressed downwards, in particular a depressed portion (21) which forms a step and has an arcuate portion side wall (21b), and **in that**, when a predetermined limit degree of wear is reached, the respective cutting edge (14a) or imaginary extension of the respective cutting edge (14a) meets the arcuate portion side wall (21b).

## Revendications

1. Machine de travail agricole, notamment moissonneuse-batteuse, comprenant au moins un groupe de travail (2-7) destiné à effectuer ou à soutenir un travail agricole, un mécanisme de coupe (2) destiné à couper et à recueillir un produit de récolte sur pied (8) étant prévu en tant que groupe de travail (2-7), le mécanisme de coupe (2) comprenant une barre porte-lames (12) comportant plusieurs lames de coupe (13),
dans laquelle
à chacune des lames de coupe (13) est associée au moins une première marque d'usure (18), qui indique l'usure (V₁) du côté inférieur de lame (U) de la lame de coupe (13) correspondante,
**caractérisée en ce qu'**à chacune des lames de coupe (13) est associée au moins une deuxième marque d'usure (19), qui indique l'usure (V₂) des tranchants (14) de la lame de coupe (13) correspondante, l'au moins une deuxième marque d'usure (19) étant prévue pour évaluer l'usure des arêtes de tranchant (14a), l'arête de tranchant (14a) étant le bord extérieur du tranchant (14) correspondant.

2. Machine de travail agricole selon la revendication 1, **caractérisée en ce que** les lames de coupe (13) comportent chacune une section de fixation (a₁), conçue pour fixer la lame de coupe (13) correspondante à la barre porte-lames (12), ainsi qu'au moins une section de tranchant (a₂), adjacente à la section de fixation (a₁), pourvue de deux tranchants (14), de préférence deux tranchants (14) convergeant l'un vers l'autre, au moins une section de tranchant (a₂) comportant, dans la zone située entre ses deux tranchants (14), à distance de son extrémité avant, une première marque d'usure (18) et/ou, à son extrémité avant, une deuxième marque d'usure (19) et, de préférence, une autre première marque d'usure (18).

3. Machine de travail agricole selon la revendication 2, **caractérisée en ce qu'**une seule section de tranchant (a₂), qui comporte, dans la zone située entre ses deux tranchants (14), à distance de son extrémité avant, une première marque d'usure (18) et, à son extrémité avant, une deuxième marque d'usure (19) et, de préférence, une autre première marque d'usure (18), est adjacente à la section de fixation (a₁) correspondante, ou
**en ce qu'**à la section de fixation (a₁) correspondante sont adjacentes plusieurs sections de tranchant (a₂), notamment deux, dont au moins une, de préférence une seule, ou toutes comportent respectivement, dans la zone située entre les deux tranchants (14), à distance de l'extrémité avant, une première marque d'usure (18) et, à l'extrémité avant, une deuxième marque d'usure (19) et, de préférence, une autre première marque d'usure (18).

4. Machine de travail agricole selon l'une des revendications 2 ou 3, **caractérisée en ce que** la première marque d'usure (18), éloignée de l'extrémité avant de la section de tranchant (a2), est formée par une section en retrait vers le bas (20), notamment circulaire, en particulier une section en retrait vers le bas (20) de forme conique ou en forme de coin, comportant un fond de section (20a), et **en ce que**, lorsque le degré limite d'usure prédéterminé est atteint, le fond de section (20a) est percé, et/ou
**en ce qu'**à l'extrémité avant de la section de tranchant (a₂), la première marque d'usure (18) est formée par une section en retrait vers le bas (21), notamment en forme de segment de cercle, en particulier une section en retrait vers le bas (21) formant un épaulement, comportant un fond de section (21a), et **en ce que**, lorsque le degré limite d'usure prédéterminé est atteint, le fond de section (21a) est partiellement ou totalement usé.

5. Machine de travail agricole selon l'une des revendications 2 à 4, **caractérisée en ce que** la deuxième marque d'usure (19), disposée à l'extrémité avant de la section de tranchant (a₂), est formée par une section en retrait vers le bas (21), notamment en forme de segment de cercle, en particulier une section en retrait vers le bas (21) formant un épaulement, comportant une paroi latérale de section (21b) en forme d'arc de cercle, et **en ce que**, lorsque le degré limite d'usure prédéterminé est atteint, l'arête de tranchant (14a) correspondante ou le prolongement imaginaire de l'arête de tranchant (14a) correspondante rencontre la paroi latérale de section (21b) en forme d'arc de cercle.
